# EUROPEAN PATENT APPLICATION

(11) **EP 3 543 777 A1**
(43) Date of publication of application: **25.09.2019**
(21) Application number: 17871391.3
(22) Date of filing: 13.11.2017
(51) Int. Cl.: G02F 1/1339, F21S 2/00, F21V 9/00, F21V 9/08, F21V 31/00, G02F 1/1335, G02F 1/13357

(54) **LIQUID CRYSTAL DISPLAY DEVICE**

(30) Priority: 16.11.2016 JP 2016223206
(71) Applicant: NS Materials Inc., Chikushino City Fukuoka 818-0042 (JP)
(72) Inventor: KANAUMI, Eiichi, Chikushino-city Fukuoka 818-0042 (JP); MIYANAGA, Akiharu, Chikushino-city Fukuoka 818-0042 (JP)
(74) Representative: SSM Sandmair
(86) International application number: PCT/JP2017/040690
(87) International publication number: WO 2018/092703

(57) **Abstract**

To provide a liquid crystal display device having a stable optical property, a liquid crystal display device (10) includes a liquid crystal display panel (11) having a counter substrate (11a), a TFT substrate (11b), and a liquid crystal layer (11c) disposed between the substrates, a light guide plate (12) disposed on a back side of the liquid crystal display panel (11), a seal member (15) configured to seal a gap between the counter substrate (11a) and the light guide plate (12), and a quantum dot-containing sheet (1) disposed between the TFT substrate (11b) and the light guide plate (12). The quantum dot-containing sheet is sealed with the seal member.

## Description

### TECHNICAL FIELD

The present invention relates to a liquid crystal display device.

### BACKGROUND ART

For example, patent documents described below disclose techniques regarding liquid crystal display devices. Patent Document 1 discloses a liquid crystal display device having a liquid crystal display panel in which liquid crystals are injected between substrates, an optical film bonded to a back side of the liquid crystal display panel, and a backlight disposed on the back side of the optical film. In addition, Patent Document 2 discloses a liquid crystal display device having an optical film such as a light guide plate or a diffuser sheet bonded to a back side of the liquid crystal display panel, and a light source disposed on a lateral side of the light guide plate.

### [Citation List]

### [Patent Documents]

Patent Document 1: Japanese Unexamined Patent Application Publication No. 2015-14751
Patent Document 2: Japanese Unexamined Patent Application Publication No. 2013-83808

### SUMMARY OF INVENTION

However, in the inventions described in each of the patent documents, the optical film disposed on the backside of the liquid crystal display panel is not hermetically sealed, and suffers from a variation in the optical property caused by an environmental change.

In view of the aforementioned problems, it is therefore an object of the present invention to provide a liquid crystal display device, particularly, having a stable optical property.

A liquid crystal display device of the present invention includes: a liquid crystal display panel having a first substrate and a second substrate, and a liquid crystal layer disposed between the first substrate and the second substrate; a backside member disposed on the second substrate side of the liquid crystal display panel; a seal member configured to seal a gap between the first substrate and the backside member; and a quantum dot-containing member disposed between the second substrate and the backside member, wherein the quantum dot-containing member is sealed with the seal member.

In the present invention, it is preferable that the liquid crystal layer and the quantum dot-containing member are sealed with the common seal member.

A liquid crystal display device of the present invention includes: a liquid crystal display panel having a first substrate and a second substrate, and a liquid crystal layer disposed between the first substrate and the second substrate; a backside member disposed on the second substrate side of the liquid crystal display panel; a seal member configured to seal a gap between the second substrate and the backside member; and a quantum dot-containing member disposed between the second substrate and the backside member, wherein the quantum dot-containing member is sealed with the seal member.

In the present invention, it is preferable that at least any one of optical members including a polarizing member, a light diffusing member, and a luminance-enhancing member is sealed together with the quantum dot-containing member between the second substrate and the backside member.

In the present invention, it is preferable that the optical member at least includes the polarizing member. In addition, in the present invention, it is preferable that the polarizing member has a polarizer and a luminance-enhancing film stacked on a surface of the polarizer.

In the present invention, it is preferable that the backside member is a light guide plate, a polarizer, a luminance-enhancing film stacked on a surface of the polarizer, and the quantum dot-containing member are included between the second substrate and the light guide plate, and the quantum dot-containing member, the polarizer, and the luminance-enhancing film are sealed with the seal member.

A liquid crystal display device of the present invention includes: a liquid crystal display panel having a first substrate and a second substrate, and a liquid crystal layer disposed between the first substrate and the second substrate; a seal member configured to seal a gap between the first substrate and the second substrate; and a quantum dot-containing member disposed between the first substrate and the second substrate, wherein the quantum dot-containing member is sealed with the seal member.

Using the liquid crystal display device according to the present invention, it is possible to obtain stable optical properties.

### BRIEF DESCRIPTION OF DRAWINGS

FIG. 1 is a cross-sectional view illustrating a liquid crystal display device according to a first embodiment of the invention;
FIG. 2 is a cross-sectional view illustrating a liquid crystal display device according to a second embodiment of the invention;
FIG. 3 is a cross-sectional view illustrating a liquid crystal display device according to a third embodiment of the invention;
FIG. 4 is a longitudinal cross-sectional view illustrating a quantum dot-containing sheet according to a first embodiment of the invention;
FIG. 5 is a longitudinal cross-sectional view illustrating a quantum dot-containing sheet according to a second embodiment of the invention;
FIG. 6 is a longitudinal cross-sectional view illustrating a quantum dot-containing sheet according to a third embodiment of the invention;
FIG. 7 is a longitudinal cross-sectional view illustrating a quantum dot-containing sheet according to a fourth embodiment of the invention; and
FIG. 8 is a perspective view illustrating a quantum dot-containing sheet according to an embodiment of the invention.

### DESCRIPTION OF EMBODIMENTS

An embodiment of the present invention (hereinafter, simply referred to as "embodiment") will be described in details. Note that the invention is not limited to the embodiment described below, and various modifications may be possible with a range of the gist.

### (Liquid Crystal Display Device)

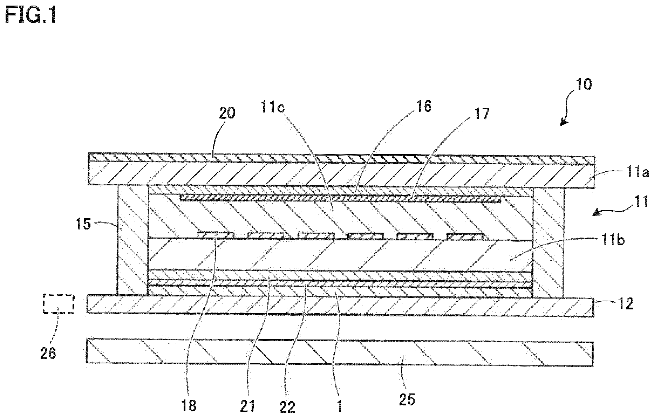

FIG. 1 is a cross-sectional view illustrating a liquid crystal display device according to a first embodiment of the invention. According to this embodiment, the liquid crystal display device 10 includes a liquid crystal display panel 11, a backside member 12 disposed on the backside of the liquid crystal display panel 11, a seal member 15 that seals a gap between a counter substrate 11a positioned on a front side of the liquid crystal display panel 11 and the backside member 12, and a quantum dot-containing sheet 1 disposed between a TFT substrate 11b positioned on the back side of the liquid crystal display panel 11 and the backside member 12 as essential elements.

As illustrated in FIG. 1, the liquid crystal display panel 11 has a counter substrate (first substrate) 11a, a TFT substrate (second substrate) 11b, and a seal member 15 that seals a liquid crystal layer 11c disposed between the counter substrate 11a and the TFT substrate 11b.

As illustrated in FIG. 1, a color filter (CF) 16 is provided in the inner side of the counter substrate 11a. The color filter 16 includes various color filters for each pixel, such as red, green, and blue colors, to form a color image. In addition, a counter electrode 17 is formed on the backside of the counter substrate 11a. In this manner, the counter substrate 11a has a structure having the color filter 16 and the counter electrode 17 formed on the inner side of the glass substrate.

As illustrated in FIG. 1, pixel electrodes 18 and thin film transistors (TFT) are formed on the inner side of the TFT substrate 11b. In this manner, the TFT substrate 11b has a structure having the pixel electrodes 18 and the TFTs formed on the inner side of the glass substrate.

As illustrated in FIG. 1, a liquid crystal layer 11c is interposed between the counter substrate 11a and the TFT substrate 11b.

In the embodiment of FIG. 1, a polarizer 20 is provided on a front side of the liquid crystal display panel 11 (that is, the counter substrate 11a side). However, the polarizer 20 may be provided or not arbitrarily.

As illustrated in FIG. 1, a polarizer 21, a luminance-enhancing sheet 22, a quantum dot-containing sheet 1, and a light guide plate as a backside member 12 (hereinafter, referred to as "light guide plate 12") are stacked on the back side of the TFT substrate 11b.

The luminance-enhancing sheet 22 may have a single layer structure or a structure formed by stacking a plurality of sheets. For example, APCF or DBEF (produced by Sumitomo 3M Co., Ltd.) may be employed as the luminance-enhancing sheet 22.

According to this embodiment, the TFT substrate 11b obtained by integrating the glass substrate, the polarizer 21, and the luminance-enhancing sheet 22 may be employed.

As illustrated in FIG. 1, the quantum dot-containing sheet 1 is interposed between the luminance-enhancing sheet 22 and the light guide plate 12. The quantum dot-containing sheet 1 may be bonded to the luminance-enhancing sheet 22 and the light guide plate 12. Alternatively, without bonding, the quantum dot-containing sheet 1 may be held while being interposed between the luminance-enhancing sheet 22 and the light guide plate 12.

Note that, in this embodiment, the quantum dot-containing sheet 1 may have a transmittance of 90% or higher. In addition, a coverage ratio of BT.2020 (color gamut) may be set to 90% or higher, and more preferably, 95% or higher.

As illustrated in FIG. 1, each end of the counter substrate 11a and the light guide plate 12 extends outward of the liquid crystal layer 11c and the TFT substrate 11b of the liquid crystal display panel 11, and a gap between each end of the extended counter substrate 11a and the extended light guide plate 12 is sealed with a seal member 15.

The seal member 15 is formed of resin such as epoxy, but its material is not particularly limited. The peripheries of the counter substrate 11a and the light guide plate 12 are surrounded by the sealing member 15. As a result, the liquid crystal layer 11c, the polarizer 21, the luminance-enhancing sheet 22, and the quantum dot-containing sheet 1 are sealed with the seal member 15.

As illustrated in FIG. 1, since the seal member 15 tightly abuts on the end face of the TFT substrate 11b, the liquid crystal layer 11c is appropriately held between the counter substrate 11a and the TFT substrate 11b.

In the embodiment of FIG. 1, the liquid crystal layer 11c and the quantum dot-containing sheet 1 can be sealed with a common seal member 15, so that the sealing structure can be simplified. In addition, the liquid crystal layer 11c can be formed by stacking each layer of FIG. 1, commonly sealing each layer with the seal member 15, and then injecting liquid crystals into a space between the counter substrate 11a and the TFT substrate 11b.

As illustrated in FIG. 1, the backlight unit 25 is provided on the backside of the light guide plate 12. However, a light source 26 (indicated by a dotted line in FIG. 1) may be disposed in the lateral side of the light guide plate 12. In this case, a reflector (not shown) is preferably provided on the backside of the light guide plate 12.

At least a quantum dot-containing sheet 1 is included between the light guide plate 12 and the TFT substrate 11b of FIG. 1. An optical member other than the quantum dot-containing sheet 1 may be interposed between the light guide plate 12 and the TFT substrate 11b. In this case, the type of the optical member, the number of the sheets, the stacking sequence, and the like are not particularly limited.

However, the stacking structure of the liquid crystal display device 10 of FIG. 1 is a desirable example, and, for example, a light diffuser may be disposed instead of the luminance-enhancing sheet 22 of FIG. 1.

In FIG. 1, a sealing layer (not shown) for bonding the counter substrate 11a and the TFT substrate 11b and holding the liquid crystal layer 11c may be provided inside the seal member 15. As a result, it is possible to further improve a sealing property.

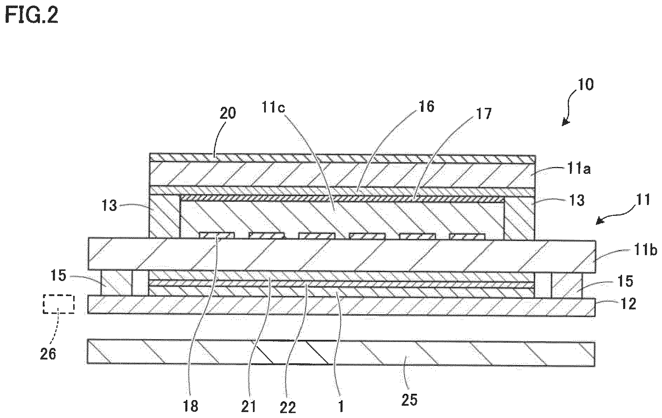

FIG. 2 is a cross-sectional view illustrating a liquid crystal display device according to a second embodiment of the invention. A description will be made mainly for the parts different from those of FIG. 1.

In FIG. 2, the liquid crystal layer 11c is sealed with a sealing layer 13 that bonds the counter substrate 11a and the TFT substrate 11b, and a sealing member 15 separate from the sealing layer 13 seals a gap between the TFT substrate 11b and the light guide plate 12. As a result, the polarizer 21, the luminance-enhancing sheet 22, and the quantum dot-containing sheet 1 positioned between the TFT substrate 11b and the light guide plate 12 can be sealed with the seal member 15.

Alternatively, instead of the light guide plate 12, a prism sheet, a lens sheet, a polarization separation sheet, a light diffuser sheet, an electromagnetic shielding sheet, or the like may be used as the backside member. The light guide plate may also be incorporated into the backlight unit 25.

The configuration of the backlight unit 25 is not particularly limited, and any configuration may be employed as long as at least a light source is included. That is, the backlight unit 25 may be a terminology that refers only to the light source, or may include the light source and other members such as a diffuser, a prism sheet, a light guide plate, and a reflector.

A phase retardation sheet may also be included as the optical member. For example, the phase retardation sheet is provided overlappingly on the polarizer (polarization film).

The position of the quantum dot-containing sheet 1 is not particularly limited. For example, the quantum dot-containing sheet 1 may be provided between the polarizer (polarization film) and the substrate or between the polarizer (polarization film) and the diffuser.

Note that, although the seal member 15 is positioned outward of the sealing layer 13 in FIG. 2, the height position may match between the seal member 15 and the sealing layer 13.

Note that, although there is a gap between the seal member 15 and the quantum dot-containing sheet 1 in FIG. 2, the seal member 15 may tightly abut on the end of the quantum dot-containing sheet 1 to remove the gap.

Although the quantum dot-containing sheet 1 of FIGS. 1 and 2 is formed as a single sheet, a plurality of sheets may be combined to obtain a predetermined size. Hereinafter, a plurality of sheets combined by tiling will be referred to as "composite sheet".

Here, consideration will be made for a configuration in which the composite sheet is disposed instead of the quantum dot-containing sheet 1 of the liquid crystal display device 1 of FIG. 1, and a diffuser is disposed on the back side of the composite sheet (that is, close to the backlight unit 25). In such a configuration, the light emitted from the backlight unit 25 and diffused by the diffuser is incident to the composite sheet. Since the light diffused by the diffuser is incident to the composite sheet, it is possible to suppress a light intensity distribution depending on a distance from the backlight unit 25. In addition, compared to a case where there is no diffuser, a distance between the backlight unit 25 and the composite sheet becomes far. Therefore, the heat emitted from the backlight unit 25 has less influence on the quantum dots contained in the composite sheet.

The backlight unit 25, the composite sheet, the diffuser, and the liquid crystal display panel 11 may be arranged in this order. As a result, even when irregularity of the luminescent color occurs due to irregular reflection at the joint of each sheet of the composite sheet or degradation of the quantum dots caused by water vapor entering from the joint or the like, it is possible to appropriately suppress irregularity in color in the display of the liquid crystal display panel 11. That is, since the light emitted from the composite sheet is diffused by the diffuser and then enters the liquid crystal display panel 11, it is possible to suppress irregularity in color in the display of the liquid crystal display panel 11.

Using the liquid crystal display device 1 described with reference to FIGS. 1 and 2, it is possible to seal the quantum dot-containing sheet 1 disposed on the back side of the liquid crystal display panel 11. Therefore, it is possible to suppress aging of the quantum dots contained in the quantum dot-containing sheet 1 and suppress a variation of the optical property such as a wavelength conversion characteristic of the quantum dot-containing sheet 1. Accordingly, it is possible to obtain a stable optical property using the liquid crystal display device 1 according to this embodiment.

In particular, as illustrated in FIG. 1, the liquid crystal layer 11c and the quantum dot-containing sheet 1 can be sealed with the common seal member 15. As a result, it is possible to implement a simple sealing structure and facilitate a manufacturing process.

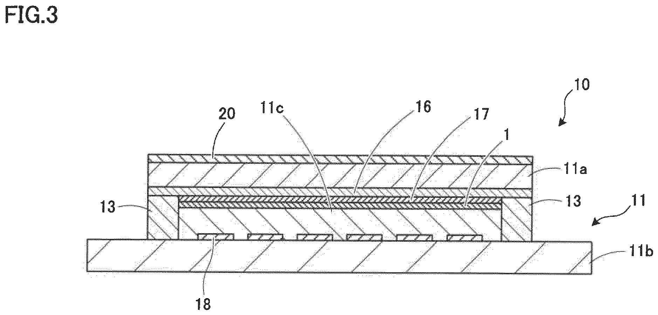

FIG. 3 is a cross-sectional view illustrating a liquid crystal display device according to a third embodiment of the invention. A description will be made mainly for the parts other than those of FIG. 1.

In the embodiment of FIG. 3, the quantum dot-containing sheet 1 is provided between the counter substrate (first substrate) 11a and the TFT substrate (second substrate) 11b and is sealed with the sealing layer (seal member) 13. In FIG. 3, the position of the quantum dot-containing sheet 1 is not particularly limited as long as it is provided between the counter substrate 11a and the TFT substrate 11b.

Using the liquid crystal display device 1 described above with reference to FIG. 3, it is possible to suppress aging of the quantum dots contained in the quantum dot-containing sheet 1 and suppress a variation in the optical property such as a wavelength conversion characteristic of the quantum dot-containing sheet 1. Therefore, using the liquid crystal display device 1 according to this embodiment, it is possible to obtain a stable optical property.

In FIG. 3, the quantum dot-containing sheet 1 may also be disposed on the TFT substrate 11b.

Although not shown in FIG. 3, the backlight unit is disposed on the back side of the TFT substrate 11b.

### (Quantum Dot-Containing Sheet)

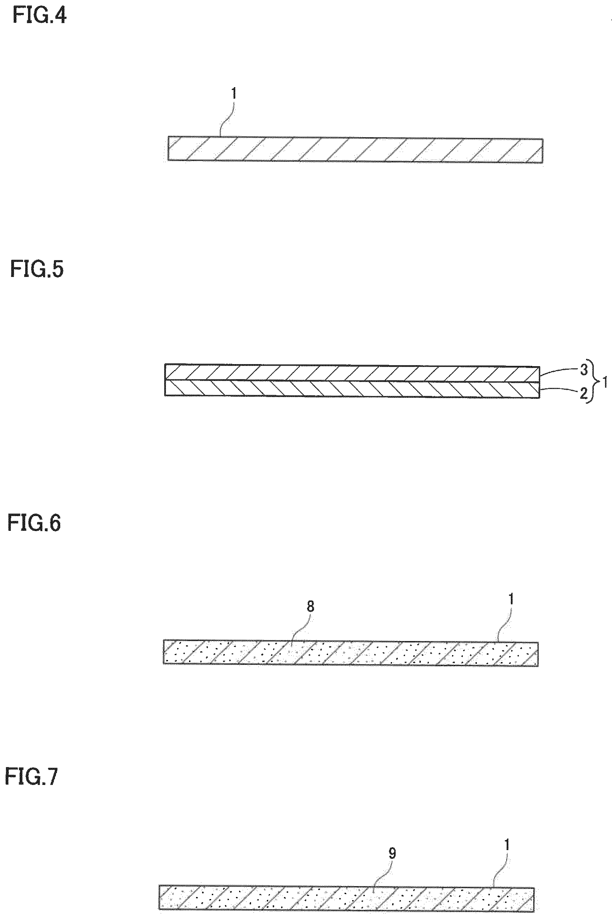

Next, the quantum dot-containing sheet 1 will be described. As illustrated in FIG. 4, the quantum dot-containing sheet 1 is a sheet product in which quantum dots are dispersed by resin.

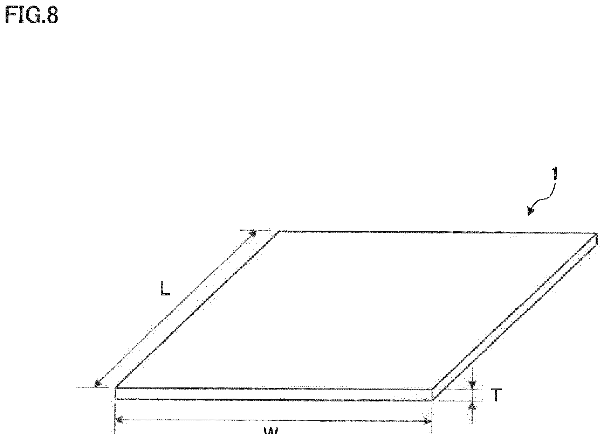

As illustrated in FIG. 8, the quantum dot-containing sheet 1 is formed in a thin plate shape, and in general, the "sheet" is configured to have a thickness smaller than its length and width. Although the quantum dot-containing sheet 1 may be flexible or not, the quantum dot-containing sheet 1 is preferably flexible. The quantum dot-containing sheet 1 may be simply referred to as "sheet", "film", "film sheet", or the like in some cases. However, herein, the "film" is defined as a flexible sheet product. In addition, even when the quantum dot-containing sheet 1 is formed to have a constant thickness, the thickness may be deformed depending on place, or may be gradually changed in a length or width direction or in a stepwise manner. The length L, width W, and thickness T of the quantum dot-containing sheet 1 are not limited, and the dimensions are variously changed depending on a product. For example, the quantum dot-containing sheet 1 may be used as a backlight for a large-sized product such as a television set, or may be used as a backlight of a small-sized portable device such as a smart phone in some cases, so that the size is determined depending on a product.

Although a plurality of quantum dots are contained in the quantum dot-containing sheet 1 with resin, a fluorescent pigment, a fluorescent dye, or the like may also be contained in addition to the quantum dots. For example, a mixture of red quantum dots and typical green fluorescent substances (such as YAG or Sialon) may be used. The resin for dispersing the quantum dots may include polypropylene, polyethylene, polystyrene, AS resin, ABS resin, acrylic resin, methacrylic resin, polyvinyl chloride, polyacetal, polyamide, polycarbonate, modified polyphenylene ether, polybutylene terephthalate, polyethylene terlene terephthalate, polysulfone, polyether sulfone, polyphenylene sulfide, polyamide imide, polymethyl pentene, liquid crystal polymer, epoxy resin, phenol resin, urea resin, melamine resin, epoxy resin, diallyl phthalate resin, unsaturated polyester resin, polyimide, polyurethane, silicone resin, styrenic thermoplastic elastomer, a mixture of some of them, or the like.

The configuration and the material of the quantum dot are not limited. For example, the quantum dot according to this embodiment may have a semiconductor particle core having a diameter of 2 to several tens nanometers. In addition to the semiconductor particle core, the quantum dot may have a shell portion that covers the surrounding of the core. The semiconductor particle core may have a diameter of 2 to 20 nm or 2 to 15 nm. The core may be formed of, for example, CdSe, but the material of the core is not particularly limited. For example, the core may be formed of CdS, CdSe, ZnS, ZnSe, InP, CdTe, CuInS₂, AgInS₂, any combination of them, or the like.

The quantum dots include quantum dots, for example, having fluorescence wavelengths of approximately 520 nm (green) and approximately 660 nm (red). For this reason, as blue light is incident from the light incidence surface, the blue color is partially converted into a green or red color by the quantum dot. As a result, white light can be obtained from the light emission surface.

The quantum dot-containing sheet 1 of FIG. 4 has a single layer structure and is formed in a sheet shape. Meanwhile, for example, as illustrated in FIG. 5, the quantum dot-containing sheet 1 may be a sheet-like product having a quantum dot layer 3 formed on at least one side of the base film 2.

In the configuration of FIG. 5, for example, the quantum dot layer 3 may be formed on the surface of the base film 2, by coating. Although not particularly limited, the base film 2 is preferably a polyethylene terephthalate (PET) film from the viewpoint of light transmittance, treatability (handlability), and adherence to the quantum dot layer 3.

According to this embodiment, as illustrated in FIG. 6, a light scattering agent 8 may be contained in the quantum dot-containing sheet 1. A material of the light scattering agent 8 is not particularly limited, and may include minute particles of SiO₂, BN, AlN, or the like. For example, the light scattering agent 8 is contained in the quantum dot-containing sheet 1 or the quantum dot layer 3 as much as 1 to 10 wt%.

According to another embodiment of FIG. 7, the quantum dot-containing sheet 1 contains a thickener 9. A material of the thickener 9 is not particularly limited, and may include a carboxyvinyl polymer, carboxymethylcellulose, acrylic acid methyl ester copolymer, bentonite (aluminum silicate), a hectorite (magnesium silicate)-based additive, or the like. Since the thickener 9 is contained, resin compositions of the quantum dot-containing sheet 1 and the quantum dot layer 3 can be adjusted to a suitable viscosity, and the quantum dot-containing sheet 1 and the quantum dot layer 3 can be easily formed in a predetermined thickness and a predetermined shape.

According to this embodiment, in order to improve dispersibility of the quantum dots contained in the quantum dot-containing sheet 1, the quantum dot-containing sheet 1 preferably contains a dispersant. A material of the dispersant is not particularly limited, and may include epoxy resins, polyurethanes, polycarboxylates, formalin condensation polymers of naphthalene sulfonates, polyethylene glycols, partially alkyl ester compounds of polycarboxylic acids, polyethers, polyalkylene polyamine, alkyl sulfonates, quaternary ammonium salts, higher alcohol alkylene oxides, polyhydric alcohol esters, alkyl polyamines, a polyphosphate dispersant, or the like. Specifically, DISPERBYK (registered trademark) produced by "BYK Japan KK" may be employed by way of example.

A barrier layer may be provided on one side or both sides of the quantum dot-containing sheet 1.

Although a sheet member is exemplified as the quantum dot-containing member in all of the embodiments, the quantum dot-containing member is not limited to the sheet shape.

According to the present invention, since it is possible to effectively suppress a temporal change of the optical property, it is possible to obtain a stable optical property even when the liquid crystal display device containing quantum dots is used under various environments.

This application is based upon Japanese Patent Application No. 2016-223206, filed on November 16, 2016, the entire content of which is incorporated herein by reference.

## Claims

1. A liquid crystal display device comprising:
a liquid crystal display panel having a first substrate and a second substrate, and a liquid crystal layer disposed between the first substrate and the second substrate;
a backside member disposed on the second substrate side of the liquid crystal display panel;
a seal member configured to seal a gap between the first substrate and the backside member; and
a quantum dot-containing member disposed between the second substrate and the backside member,
wherein the quantum dot-containing member is sealed with the seal member.

2. The liquid crystal display device according to claim 1, wherein the liquid crystal layer and the quantum dot-containing member are sealed with the common seal member.

3. A liquid crystal display device comprising:
a liquid crystal display panel having a first substrate and a second substrate, and a liquid crystal layer disposed between the first substrate and the second substrate;
a backside member disposed on the second substrate side of the liquid crystal display panel;
a seal member configured to seal a gap between the second substrate and the backside member; and
a quantum dot-containing member disposed between the second substrate and the backside member,
wherein the quantum dot-containing member is sealed with the seal member.

4. The liquid crystal display device according to any one of claims 1 to 3, wherein at least any one of optical members including a polarizing member, a light diffusing member, and a luminance-enhancing member is sealed together with the quantum dot-containing member between the second substrate and the backside member.

5. The liquid crystal display device according to claim 4, wherein the optical member at least includes the polarizing member.

6. The liquid crystal display device according to claim 4 or 5, wherein the polarizing member has a polarizer and a luminance-enhancing film stacked on a surface of the polarizer.

7. The liquid crystal display device according to any one of claims 1 to 6, wherein the backside member is a light guide plate,
a polarizer, a luminance-enhancing film stacked on a surface of the polarizer, and the quantum dot-containing member are included between the second substrate and the light guide plate, and
the quantum dot-containing member, the polarizer, and the luminance-enhancing film are sealed with the seal member.

8. A liquid crystal display device comprising:
a liquid crystal display panel having a first substrate and a second substrate, and a liquid crystal layer disposed between the first substrate and the second substrate;
a seal member configured to seal a gap between the first substrate and the second substrate; and
a quantum dot-containing member disposed between the first substrate and the second substrate,
wherein the quantum dot-containing member is sealed with the seal member.
